# EUROPEAN PATENT SPECIFICATION

(11) **EP 3 263 367 B1**
(45) Date of publication and mention of the grant of the patent: **07.10.2020**
(21) Application number: 17173864.4
(22) Date of filing: 01.06.2017
(51) Int. Cl.: B60C 11/03

(54) **PNEUMATIC TIRE**
LUFTREIFEN
PNEUMATIQUE

(30) Priority: 01.07.2016 JP 2016131874
(43) Date of publication of application: 03.01.2018
(73) Proprietor: Sumitomo Rubber Industries, Ltd., Kobe-shi, Hyogo-ken (JP)
(72) Inventor: SATO, Takuya, Kobe-shi, Hyogo 651-0072 (JP)
(74) Representative: Manitz Finsterwald Patent- und Rechtsanwaltspartnerschaft mbB

(56) References cited:
- EP-A1- 2 586 626
- EP-A1- 2 821 256
- EP-A1- 3 017 963
- EP-A1- 3 031 626
- JP-A- 2011 042 328

## Description

### BACKGROUND OF THE INVENTION

### Field of the Invention

The present invention relates to a pneumatic tire that can exert excellent performance on ice and snow while inhibiting a decrease in steering stability.

### Description of the Background Art

For example, Japanese Laid-Open Patent Publication No. 2011-42328 proposes a pneumatic tire in which, in order to enhance performance on ice and snow, a circumferential sipe is provided in each shoulder land portion so as to extend continuously in the circumferential direction of the tire, and shoulder axial grooves are provided so as to traverse the overall width of the shoulder land portion.

However, the shoulder axial grooves, which traverse the overall width of the shoulder land portion, locally decrease the stiffness, in the tire circumferential direction, of the shoulder land portion, and further tend to deteriorate steering stability.

EP 3 017 963 A1 discloses a tire having the features of the preamble of claim 1. EP 2 586 626 A1, EP 3 031 626 A1 and EP 2 821 256 A1 relate to similar tire designs

The present invention has been made in view of the above-described problem, and the main object of the present invention is to provide a pneumatic tire that basically has improved arrangement of shoulder axial grooves, etc. and that can exert excellent performance on ice and snow while inhibiting a decrease in steering stability.

### SUMMARY OF THE INVENTION

A tire according to the invention has the features of claim 1. Subclaims are directed to preferable embodiments.

In the pneumatic tire according to the present invention, a distance in the tire axial direction from a tire equator to the circumferential sipe is preferably 0.60 to 0.75 times of a distance in the tire axial direction from the tire equator to the tread edge.

In the pneumatic tire according to the present invention, preferably, each of the inner shoulder axial grooves and the outer shoulder axial grooves includes a first region and a second region having a smaller groove depth than the first region; in each of the inner shoulder axial grooves, the second region is provided outward of the first region in the tire axial direction; and in each of the outer shoulder axial grooves, the second region is provided inward of the first region in the tire axial direction.

In the pneumatic tire according to the present invention, the second region of each outer shoulder axial groove preferably has a larger groove depth than the second region of each inner shoulder axial groove.

In the pneumatic tire according to the present invention, a first crown land portion adjacent to the shoulder land portion across the shoulder main groove is provided in the tread portion, a crown axial groove traversing the first crown land portion is provided in the first crown land portion, and an outer end portion, at the shoulder main groove side, of the crown axial groove is provided at a position that intersects a region obtained by imaginarily extending an inner end portion, at the shoulder main groove side, of the inner shoulder axial groove along the tire axial direction.

In the pneumatic tire according to the present invention, the crown axial groove includes a first region and second regions that are provided at both sides, in the tire axial direction, of the first region, respectively and each have a smaller groove depth than the first region.

In the pneumatic tire according to the present invention, preferably, the tread portion has a crown main groove that is located inward of the shoulder main groove in the tire axial direction and continuously extends in the tire circumferential direction, and a first crown land portion and a second crown land portion that are adjacent to each other across the crown main groove; in each of the first crown land portion and the second crown land portion, a crown axial groove traversing the land portion and a crown lug groove that communicates at an end thereof with the crown main groove and terminates at another end thereof in the land portion are provided; and the crown lug groove provided in the first crown land portion is provided at a position that intersects a region obtained by imaginarily extending, along the tire axial direction, an inner end portion, at the crown main groove side, of the crown axial groove provided in the second crown land portion.

In the pneumatic tire according to the present invention, the crown lug groove provided in the second crown land portion is preferably provided at a position that intersects a region obtained by imaginarily extending, along the tire axial direction, an inner end portion, at the crown main groove side, of the crown axial groove provided in the first crown land portion.

In the pneumatic tire according to the present invention, the crown lug groove provided in the first crown land portion and the crown axial groove provided in the second crown land portion are preferably inclined in directions that are the same as each other.

The shoulder land portion of the pneumatic tire according to the present invention is divided into the inner land portion at the shoulder main groove side and the outer land portion at the tread edge side by the circumferential sipe being provided so as to continuously extend in the tire circumferential direction and have a width of not greater than 2 mm. The plurality of inner shoulder axial grooves that communicate between the shoulder main groove and the circumferential sipe are provided in the inner land portion, and the plurality of outer shoulder axial grooves that communicate between the tread edge and the circumferential sipe are provided in the outer land portion. The circumferential sipe provides frictional force in the tire axial direction by an edge thereof, and serves to enhance turning performance particularly on ice. The inner shoulder axial grooves and the outer shoulder axial grooves have a total groove volume that is substantially equal to the volumes of axial grooves traversing the overall width of the shoulder land portion, and further can exert excellent performance on ice and snow.

The inner end portion, in the tire axial direction, of each outer shoulder axial groove is provided at the position that does not intersect the region obtained by imaginarily extending the outer end portion, in the tire axial direction, of the inner shoulder axial groove along the tire axial direction. Accordingly, the shoulder land portion is not divided by axial grooves that are substantially connected to each other as one groove via the circumferential sipe. Therefore, the pneumatic tire according to the present invention prevents the stiffness, in the tire circumferential direction, of each shoulder land portion from locally decreasing, and further can prevent deterioration of steering stability.

### BRIEF DESCRIPTION OF THE DRAWINGS

FIG. 1 is a development of a tread portion of a pneumatic tire according to an embodiment of the present invention;
FIG. 2 is an enlarged view of a shoulder land portion and a crown land portion in FIG. 1;
FIG. 3(a) is a cross-sectional view of an inner shoulder axial groove taken along the line A-A in FIG. 2;
FIG. 3(b) is a cross-sectional view of an outer shoulder axial groove taken along the line B-B in FIG. 2;
FIG. 4 is a cross-sectional view of a crown axial groove taken along the line C-C in FIG. 2;
FIG. 5 is an enlarged view of a first crown land portion and a second crown land portion in FIG. 1; and
FIG. 6 is a development of a tread portion of a pneumatic tire of a comparative example.

### DESCRIPTION OF THE PREFERRED EMBODIMENTS

Hereinafter, an embodiment of the present invention will be described with reference to the drawings.

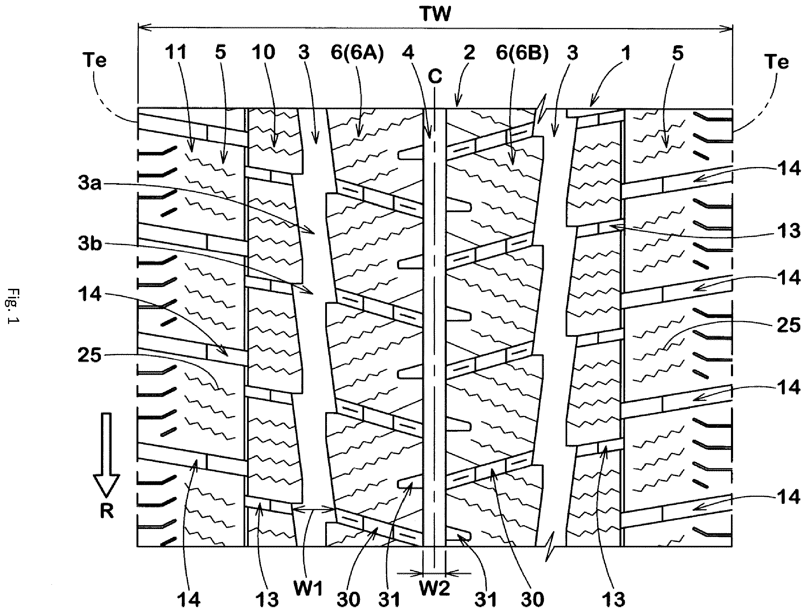

FIG. 1 is a development of a tread portion 2 of a pneumatic tire (hereinafter, sometimes referred to merely as "tire") 1 according to the present embodiment. For example, the tire 1 according to the present embodiment is suitably used as a winter tire for a passenger car. The tire 1 according to the present embodiment has a directional pattern for which a rotation direction R is designated. The rotation direction R is shown, for example, on each side wall (not shown) by a character or a symbol.

As shown in FIG. 1, a pair of shoulder main grooves 3, 3 and a crown main groove 4 therebetween are provided in the tread portion 2 of the tire 1 according to the present embodiment.

The shoulder main grooves 3 continuously extend in the tire circumferential direction at tread edge Te sides in the respective sides of a tire equator C.

Each tread edge Te is a ground contact position at the outermost side in the tire axial direction when a normal load is applied to the tire 1 in a normal state and the tire 1 is brought into contact with a plane at a camber angle of 0°. The normal state is a state where the tire is mounted to a normal rim and inflated to a normal internal pressure and no load is applied to the tire. In the present specification, unless otherwise specified, dimensions of components of the tire and the like are values measured in the normal state.

The "normal rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The "normal load" is a load that is defined, in a standard system including a standard on which the tire is based, by the standard for each tire, and is the "maximum load capacity" in the JATMA standard, the "maximum value" indicated in the table "TIRE LOAD LIMITS AT VARIOUS COLD INFLATION PRESSURES" in the TRA standard, or the "LOAD CAPACITY" in the ETRTO standard.

Each shoulder main groove 3 extends, for example, zigzag. However, each shoulder main groove 3 may extend, for example, straight. In each shoulder main groove 3 of the present embodiment, for example, narrow width portions 3a inclined to one side relative to the tire axial direction and wide width portions 3b having a larger groove width in the tire axial direction than the narrow width portions 3a are alternately provided. Such a shoulder main groove 3 can exert large snow column shearing force during running on snow.

For example, the narrow width portions 3a of each shoulder main groove 3 are preferably inclined to the tire equator C side toward the rotation direction R of the tire. Such narrow width portions 3a generate reaction force at the tire equator C side when snow columns are sheared, and further serve to enhance straight running stability during running on snow.

The crown main groove 4 extends, for example, on the tire equator C continuously and straight in the tire circumferential direction. However, the form of the crown main groove 4 is not limited to such a form, and the crown main groove 4 may be provided at each of both sides of the tire equator C, or may extend zigzag.

A maximum groove width W1 of each shoulder main groove 3 is, for example, preferably 6.0% to 8.5% of a tread ground-contact width TW. A groove width W2 of the crown main groove 4 is, for example, preferably, 3.0% to 4.5% of the tread ground-contact width TW. The groove depths (not shown) of each shoulder main groove 3 and the crown main groove 4 are, for example, preferably, 7.0 to 15.0 mm. The tread ground-contact width TW is the distance in the tire axial direction between the tread edges Te of the tire 1 in the normal state.

The groove width W2 of the crown main groove 4 is preferably smaller than the groove width W1 of each shoulder main groove 3. Such a crown main groove 4 maintains the stiffness of a land portion near the tire equator C, and further can prevent deterioration of steering stability.

In the tread portion 2, shoulder land portions 5 and a crown land portion 6 are demarcated by the above-described main grooves 3 and 4 being provided therein.

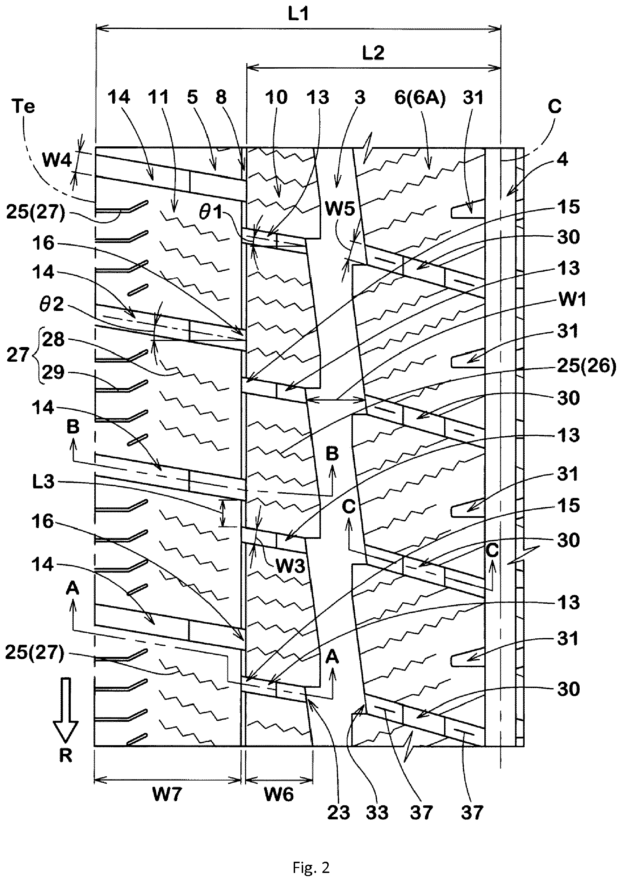

FIG. 2 shows an enlarged view of the shoulder land portion 5 and the crown land portion 6 in FIG. 1. As shown in FIG. 2, the shoulder land portion 5 is demarcated between the tread edge Te and the shoulder main groove 3.

In each shoulder land portion 5, a circumferential sipe 8 is provided so as to continuously extend in the tire circumferential direction. In the present specification, the "sipe" means a slit having a width of not greater than 2 mm. The circumferential sipe 8 preferably extends, for example, straight. The circumferential sipe 8 provides frictional force in the tire axial direction by an edge thereof, and serves to enhance turning performance particularly on ice.

In order to achieve both desired steering stability on a dry road surface and desired performance on ice and snow, a distance L2 in the tire axial direction from the tire equator C to the circumferential sipe 8 is, for example, preferably not less than 0.55 times and more preferably not less than 0.60 times of a distance L1 in the tire axial direction from the tire equator C to the tread edge Te, and is preferably not greater than 0.80 times and more preferably not greater than 0.75 times of the distance L1.

Each shoulder land portion 5 is divided into an inner land portion 10 at the shoulder main groove 3 side and an outer land portion 11 at the tread edge Te side by the circumferential sipe 8. In the present embodiment, the inner land portion 10 is demarcated between the shoulder main groove 3 and the circumferential sipe 8. A width W6, in the tire axial direction, of the inner land portion 10 is, for example, preferably 0.10 to 0.20 times of the distance L1. The outer land portion 11 is demarcated between the tread edge Te and the circumferential sipe 8. A width W7, in the tire axial direction, of the outer land portion 11 is, for example, preferably 0.30 to 0.40 times of the distance L1.

In the inner land portion 10, a plurality of inner shoulder axial grooves 13 are provided so as to communicate between the shoulder main groove 3 and the circumferential sipe 8. In the outer land portion 11, a plurality of outer shoulder axial grooves 14 are provided so as to communicate between the tread edge Te and the circumferential sipe 8. The inner shoulder axial grooves 13 and the outer shoulder axial grooves 14 have a total groove volume that is substantially equal to the volumes of axial grooves traversing the overall width of the shoulder land portion 5, and further can exert excellent performance on ice and snow.

An inner end portion 16, in the tire axial direction, of each outer shoulder axial groove 14 is provided at a position that does not intersect a region obtained by imaginarily extending an outer end portion 15, in the tire axial direction, of the inner shoulder axial groove 13 along the tire axial direction. Accordingly, the shoulder land portion 5 is not divided by axial grooves that are substantially connected to each other as one groove via the circumferential sipe 8. Therefore, the tire 1 according to the present invention prevents the stiffness, in the tire circumferential direction, of each shoulder land portion 5 from locally decreasing, and further can prevent deterioration of steering stability.

The inner shoulder axial grooves 13 and the outer shoulder axial grooves 14 are, for example, preferably inclined in the same direction relative to the tire axial direction. Specifically, the inner shoulder axial grooves 13 and the outer shoulder axial grooves 14 of the present embodiment are inclined to the rotation direction R side of the tire toward the tire equator C side. An angle θ1 of each inner shoulder axial groove 13 relative to the tire axial direction and an angle θ2 of each outer shoulder axial groove 14 relative to the tire axial direction are, for example, preferably 5 to 15°. Each of such axial grooves 13 and 14 can exert large snow column shearing force also in the tire axial direction during running on snow.

Each of a groove width W3 of each inner shoulder axial groove 13 and a groove width W4 of each outer shoulder axial groove 14 is, for example, preferably 0.20 to 0.40 times of the maximum groove width W1 of the shoulder main groove 3. As a further preferable mode, the groove width W4 of each outer shoulder axial groove 14 of the present embodiment is larger than the groove width W3 of each inner shoulder axial groove 13. Specifically, the groove width W4 of each outer shoulder axial groove 14 is, for example, preferably 1.20 to 1.50 times of the groove width W3 of each inner shoulder axial groove 13. Accordingly, the stiffness, in the tire circumferential direction, of the outer land portion 11 is relatively reduced, so that excellent wandering performance is achieved.

A positional displacement amount L3 by which the outer end portion 15, in the tire axial direction, of each inner shoulder axial groove 13 and the inner end portion 16 of each outer shoulder axial groove 14 are displaced relative to each other in the tire circumferential direction is, for example, preferably 1.0 to 1.5 times of the groove width W4 of each outer shoulder axial groove 14. In the case where the positional displacement amount L3 is smaller than 1.0 time of the groove width W4, the stiffness, in the tire circumferential direction, of the inner land portion 10 and the outer land portion 11 easily decreases locally, and further steering stability may deteriorate. In the case where the positional displacement amount L3 is larger than 1.5 times of the groove width W4, the land portion near each of the axial grooves 13 and 14 is difficult to bend, so that each of the axial grooves 13 and 14 tends to be easily clogged with snow.

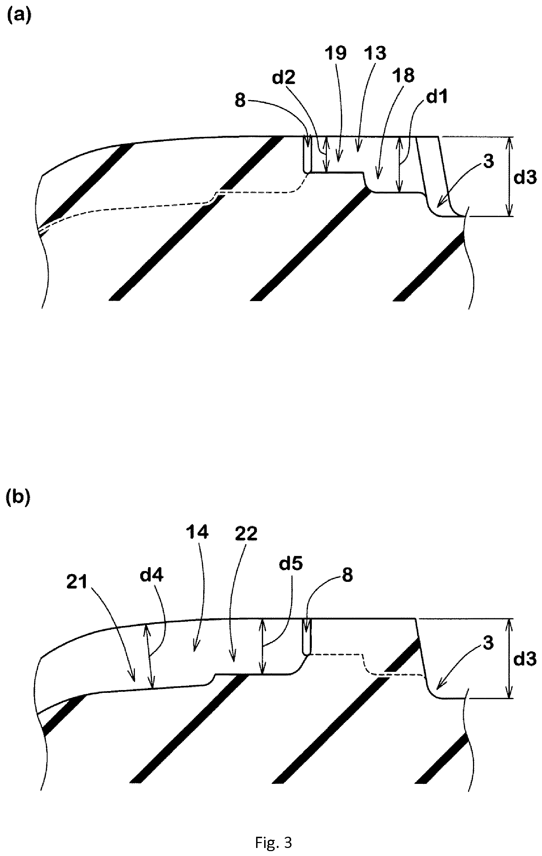

FIG. 3(a) shows a cross-sectional view of the inner shoulder axial groove 13 taken along the line A-A in FIG. 2. As shown in FIG. 3(a), the inner shoulder axial groove 13 preferably includes, for example, a first region 18 and a second region 19 having a smaller groove depth than the first region 18. In each inner shoulder axial groove 13 of the present embodiment, the second region 19 is provided outward of the first region 18 in the tire axial direction. Such an inner shoulder axial groove 13 can make up for a decrease in the stiffness of the shoulder land portion 5 caused by the circumferential sipe 8.

Each of a groove depth d1 of the first region 18 and a groove depth d2 of the second region 19 of each inner shoulder axial groove 13 is, for example, preferably 0.45 to 0.70 times of a groove depth d3 of each shoulder main groove 3. As a further preferable mode, in the present embodiment, the groove depth d2 of the second region 19 of each inner shoulder axial groove 13 is, for example, 0.60 to 0.70 times of the groove depth d1 of the first region 18 of each inner shoulder axial groove 13. Such an inner shoulder axial groove 13 can enhance steering stability and performance on ice and snow in a balanced manner.

FIG. 3(b) shows a cross-sectional view of the outer shoulder axial groove 14 taken along the line B-B in FIG. 2. As shown in FIG. 3(b), the outer shoulder axial groove 14 preferably includes a first region 21 and a second region 22 having a smaller groove depth than the first region 21. In each outer shoulder axial groove 14 of the present embodiment, the second region 22 is provided inward of the first region 21 in the tire axial direction. Such an outer shoulder axial groove 14 can make up for the decrease in the stiffness of the shoulder land portion 5 caused by the circumferential sipe 8.

Each of a groove depth d4 of the first region 21 and a groove depth d5 of the second region 22 of each outer shoulder axial groove 14 is, for example, preferably 0.65 to 0.80 times of the groove depth d3 of each shoulder main groove 3. As a further preferable mode, in the present embodiment, the groove depth d5 of the second region 22 of each outer shoulder axial groove 14 is, for example, 0.85 to 0.95 times of the groove depth d4 of the first region 21 of each outer shoulder axial groove 14.

The second region 22 of each outer shoulder axial groove 14 preferably has a larger groove depth than the second region 19 (shown in FIG. 3(a)) of each inner shoulder axial groove 13. The groove depth d5 of the second region 22 of each outer shoulder axial groove 14 is preferably not less than 1.40 times and more preferably not less than 1.50 times of the groove depth d2 of the second region 19 of each inner shoulder axial groove 13, and is preferably not greater than 1.70 times and more preferably not greater than 1.60 times of the groove depth d2. Such an outer shoulder axial groove 14 can achieve both desired steering stability and desired performance on ice and snow and exert excellent wandering performance.

As shown in FIG. 2, in each shoulder land portion 5, for example, shoulder sipes 25 are preferably provided. The shoulder sipes 25 include, for example, inner sipes 26 provided in the inner land portion 10 and outer sipes 27 provided in the outer land portion 11.

For example, the inner sipes 26 traverse the overall width of the inner land portion 10. The inner sipes 26 of the present embodiment extend, for example, zigzag. At such inner sipes 26, sipe walls opposing each other are brought into mesh with each other during running with the tire, so that the apparent stiffness of the inner land portion 10 can be enhanced.

The outer sipes 27 include, for example, a first outer sipe 28 that terminates at both ends thereof in the outer land portion 11, and a second outer sipe 29 that communicates at an end thereof with the tread edge Te and terminates at another ends thereof in the outer land portion 11. In the present embodiment, a plurality of first outer sipes 28 are provided at the circumferential sipe 8 side, and a plurality of second outer sipes 29 are provided outward of the plurality of first outer sipes 28 in the tire axial direction.

The first outer sipes 28 preferably extend, for example, zigzag. Each of such first outer sipes 28 can increase frictional force by an edge thereof while maintaining the stiffness of the outer land portion 11.

For example, the second outer sipes 29 preferably extend from the tread edge Te side inward in the tire axial direction, locally bend, and terminate. As compared to a sipe that entirely extends straight, each of such second outer sipes 29 can have an increased substantial sipe length while being inhibited from being excessively open near an inner end portion thereof in the tire axial direction.

As shown in FIG. 1, the crown land portion 6 is provided between the shoulder main grooves 3, 3. In the present embodiment, a first crown land portion 6A and a second crown land portion 6B are demarcated so as to be adjacent to each other across the crown main groove 4. Hereinafter, the configuration of the first crown land portion 6A will be described, and the second crown land portion 6B has substantially the same configuration as the first crown land portion 6A.

As shown in FIG. 2, the first crown land portion 6A is adjacent to the shoulder land portion 5 across the shoulder main groove 3. In the first crown land portion 6A, for example, a plurality of crown axial grooves 30 that traverse the overall width of the first crown land portion 6A and crown lug grooves 31 that terminate in the land portion 6A are provided alternately in the tire circumferential direction.

For example, each crown axial groove 30 is preferably inclined in the same direction as each inner shoulder axial groove 13, which is provided outward thereof in the tire axial direction. For example, each crown axial groove 30 of the present embodiment is inclined relative to the tire axial direction at an angle θ3 (not shown) larger than that of each inner shoulder axial groove 13. For example, the angle θ3 is preferably 10 to 20°.

For example, each crown axial groove 30 extends with a uniform groove width W5. For example, the groove width W5 of each crown axial groove 30 is preferably larger than the groove width W3 of each inner shoulder axial groove 13. Specifically, the groove width W5 of each crown axial groove 30 is preferably 1.15 to 1.30 times of the groove width W3 of each inner shoulder axial groove 13. In the present embodiment, since the stiffness of the shoulder land portion 5 is maintained as described above, even when the groove width of each crown axial groove 30 is increased, steering stability can be maintained, and performance on ice and snow can be further enhanced.

An outer end portion 33, at the shoulder main groove 3 side, of each crown axial groove 30 is provided at a position that intersects a region obtained by imaginarily extending an inner end portion 23, at the shoulder main groove 3 side, of the inner shoulder axial groove 13 along the tire axial direction. Accordingly, during running on snow, large snow columns can be formed by the shoulder main groove 3, the inner shoulder axial grooves 13, and the crown axial grooves 30.

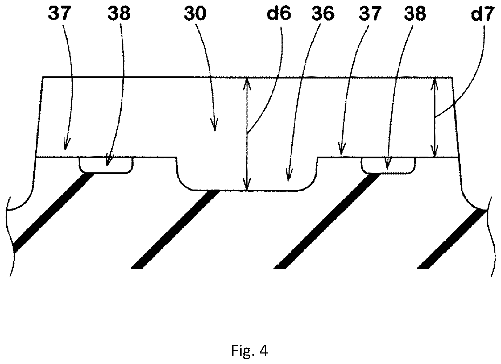

FIG. 4 shows a cross-sectional view of the crown axial groove 30 taken along the line C-C in FIG. 2. As shown in FIG. 4, the crown axial groove 30 includes a first region 36 and second regions 37 that are provided at both ends, in the tire axial direction, of the first region 36, respectively, and each have a smaller groove depth than the first region 36. A groove depth d7 of each second region 37 is, for example, 0.65 to 0.75 times of a groove depth d6 of the first region 36. Accordingly, a decrease in the stiffness of each crown land portion 6 caused by increasing the groove width of each crown axial groove 30 can be alleviated.

In each second region 37 of each crown axial groove 30, a groove-bottom sipe 38 is preferably provided so as to be open in the groove bottom thereof. Such a groove-bottom sipe 38 can inhibit the crown axial groove 30 from being clogged with snow.

As shown in FIG. 2, for example, each crown lug groove 31 communicates at an end thereof with the crown main groove 4 and terminates at another end thereof in the land portion 6A. Each crown lug groove 31 of the present embodiment terminates inward, in the tire axial direction, of the first region 36 of the crown axial groove 30 adjacent thereto in the tire circumferential direction. Accordingly, performance on ice and snow is enhanced while the stiffness of the crown land portion 6 is maintained.

For example, each crown lug groove 31 is preferably inclined in a direction opposite to that of the crown axial groove 30 adjacent thereto in the tire circumferential direction. For example, each crown lug groove 31 preferably has a groove width that gradually decreases toward the outer side in the tire axial direction. Such a crown lug groove 31 can be effectively inhibited from being clogged with snow.

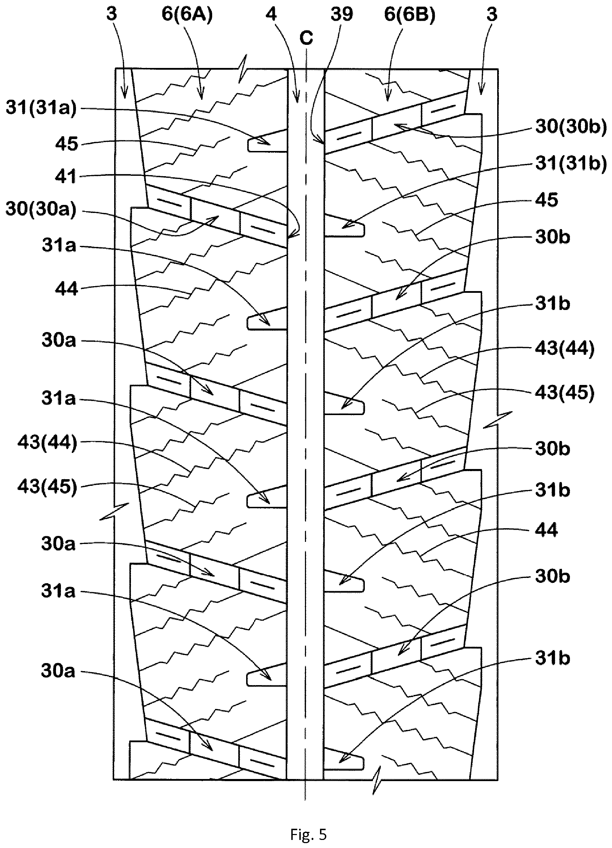

FIG. 5 shows an enlarged view of the first crown land portion 6A and the second crown land portion 6B in FIG. 1. As shown in FIG. 5, for example, each crown lug groove 31a provided in the first crown land portion 6A is preferably provided at a position that intersects a region obtained by imaginarily extending, along the tire axial direction, an inner end portion 39, at the crown main groove 4 side, of a crown axial groove 30b provided in the second crown land portion 6B.

Similarly, for example, each crown lug groove 31b provided in the second crown land portion 6B is preferably provided at a position that intersects a region obtained by imaginarily extending, along the tire axial direction, an inner end portion 41, at the crown main groove 4 side, of a crown axial groove 30a provided in the first crown land portion 6A.

Accordingly, large snow columns can be formed by the crown main groove 4, the crown axial grooves 30, and the crown lug grooves 31, so that excellent performance on ice and snow is achieved.

As a further preferable mode, the crown lug grooves 31a provided in the first crown land portion 6A and the crown axial grooves 30b provided in the second crown land portion 6B are inclined in directions that are the same as each other. The crown lug grooves 31b provided in the second crown land portion 6B and the crown axial grooves 30a provided in the first crown land portion 6A are inclined in directions that are the same as each other. Accordingly, during running on snow, snow in the crown axial grooves 30 and snow in the crown lug grooves 31 are pressed together so as to be integrated with each other, and further large reaction force is generated during shearing.

Crown sipes 43 are preferably provided in each of the crown land portions 6A and 6B. For example, the crown sipes 43 of the present embodiment are preferably inclined in a direction opposite to that of each crown axial groove 30 provided in the same land portion. Such crown sipes 43 can provide frictional force in multiple directions by edges thereof during running on ice.

For example, the crown sipes 43 include first crown sipes 44 each of which communicates at each of both ends thereof with the axial groove or the main groove, and second crown sipes 45 each of which communicates at an end thereof with the axial groove or the main groove and terminates at another end thereof in the land portion.

For example, a part of each crown sipe 43 preferably has a zigzag shape. At such a crown sipe 43, sipe walls opposing each other are brought into mesh with each other during running with the tire, so that the apparent stiffness of the crown land portion 6 can be enhanced.

Although the pneumatic tire according to the embodiment of the present invention has been described in detail above, the present invention is not limited to the above specific embodiment, and various modifications can be made to implement the present invention.

### EXAMPLES

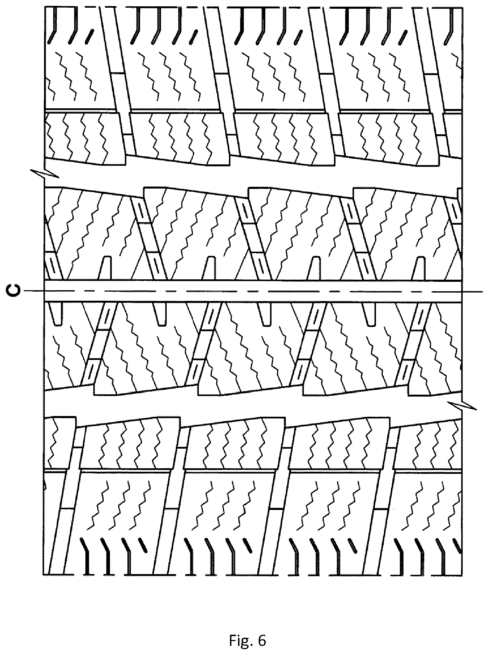

Pneumatic tires with a size of 205/65R16 having the basic tread pattern shown in FIG. 1 were produced as test samples on the basis of specifications in Table 1. Pneumatic tires provided with shoulder axial grooves traversing the overall width of each shoulder land portion as shown in FIG. 6 were produced as test samples of a comparative example. Each test tire was tested for steering stability and performance on ice and snow. The common specifications and the test methods for each test tire are as follows.
Rim: 16×6.0J
Tire internal pressure: 240 kPa
Test vehicle: a four-wheel-drive vehicle having a displacement of 2500 cc
Test tire mounted position: all wheels
Load amount: 50% of the maximum carrying capacity
Distance L1 from tire equator to each tread edge: 88.0 mm
Groove width W4 of each outer shoulder axial groove: 5.0 mm
Groove depth d2 of second region of each inner shoulder axial groove: 6.5 mm

### <Steering Stability>

Sensory evaluation was made by a driver for steering stability when the driver drove the above test vehicle on an asphalt circuit track. The results are scores obtained on the basis of the result of the comparative example being 100. A higher value indicates better steering stability.

### <Performance on Ice and Snow>

Sensory evaluation was made by a driver for running performance when the driver droves the above test vehicle on an ice and snow road surface. The results are scores obtained on the basis of the result of the comparative example being 100. A higher value indicates better performance on ice and snow.

The test results are shown in Table 1.

**[Table 1]**

| | Comp. Ex. | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 |
|---|---|---|---|---|---|---|---|---|---|---|---|---|---|---|---|
| Figure showing tread pattern | FIG. 6 | FIG. 1 | FIG. 1 | FIG. 1 | FIG. 1 | FIG. 1 | FIG. 1 | FIG. 1 | FIG. 1 | FIG. 1 | FIG. 1 | FIG. 1 | FIG. 1 | FIG. 1 | FIG. 1 |
| Distance L2 from tire equator to circumferential sipe/Distance L1 from tire equator to tread edge | 0.65 | 0.65 | 0.55 | 0.60 | 0.75 | 0.80 | 0.65 | 0.65 | 0.65 | 0.65 | 0.65 | 0.65 | 0.65 | 0.65 | 0.65 |
| Positional displacement amount L3 of each shoulder axial groove/Groove width W4 of each outer shoulder axial groove | 0 | 1.20 | 1.20 | 1.20 | 1.20 | 1.20 | 0.50 | 1.00 | 1.50 | 2.00 | 1.20 | 1.20 | 1.20 | 1.20 | 1.20 |
| Groove depth d5 of second region of each outer shoulder axial groove/groove depth d2 of second region of each inner shoulder axial groove | 1.55 | 1.55 | 1.55 | 1.55 | 1.55 | 1.55 | 1.55 | 1.55 | 1.55 | 1.55 | 1.00 | 1.40 | 1.50 | 1.60 | 1.70 |
| Steering stability (score) | 100 | 113 | 112 | 113 | 111 | 108 | 107 | 110 | 113 | 113 | 113 | 113 | 113 | 110 | 108 |
| Performance on ice and snow (score) | 100 | 103 | 100 | 102 | 103 | 104 | 100 | 102 | 101 | 101 | 100 | 101 | 102 | 102 | 104 |

As shown in Table 1, the pneumatic tires of the examples exert better steering stability than the pneumatic tires of the comparative example while exerting performance on ice and snow that is similar or the same as the pneumatic tires of the comparative example. That is, it can be confirmed that the pneumatic tires of the examples exert excellent performance on ice and snow while inhibiting a decrease in steering stability.

## Claims

1. A pneumatic tire (1) having a tread portion (2), wherein
a shoulder main groove (3) extending in a tire circumferential direction at each tread edge (Te) side and a shoulder land portion (5) demarcated between the tread edge (Te) and the shoulder main groove (3) are provided in the tread portion (2),
the shoulder land portion (5) is divided into an inner land portion (10) at the shoulder main groove (3) side and an outer land portion (11) at the tread edge (Te) side by a circumferential sipe (8) being provided so as to continuously extend in the tire circumferential direction and have a width of not greater than 2 mm,
a plurality of inner shoulder axial grooves (13) that communicate between the shoulder main groove (3) and the circumferential sipe (8) are provided in the inner land portion (10),
a plurality of outer shoulder axial grooves (14) that communicate between the tread edge (Te) and the circumferential sipe (8) are provided in the outer land portion (11),
an inner end portion (16), in a tire axial direction, of each outer shoulder axial groove (14) is provided at a position that does not intersect a region obtained by imaginarily extending an outer end portion (15), in the tire axial direction, of the inner shoulder axial groove (13) along the tire axial direction,
a first crown land portion (6A) adjacent to the shoulder land portion (5) across the shoulder main groove (3) is provided in the tread portion (2), and
a crown axial groove (30) traversing the first crown land portion (6A) is provided in the first crown land portion (6A),
**characterized in that**
an outer end portion (33), at the shoulder main groove (3) side, of the crown axial groove (30) is provided at a position that intersects a region obtained by imaginarily extending an inner end portion (23), at the shoulder main groove (3) side, of the inner shoulder axial groove (13) along the tire axial direction, and
the crown axial groove (30) includes a first region (36) and second regions (37) that are provided at both sides, in the tire axial direction, of the first region (36), respectively and each have a smaller groove depth than the first region (36).

2. The pneumatic tire (1) according to claim 1, wherein a distance (L2) in the tire axial direction from a tire equator (C) to the circumferential sipe (8) is 0.60 to 0.75 times of a distance (L1) in the tire axial direction from the tire equator (C) to the tread edge (Te).

3. The pneumatic tire (1) according to claim 1 or 2, wherein
each of the inner shoulder axial grooves (13) and the outer shoulder axial grooves (14) includes a first region (18, 21) and a second region (19, 22) having a smaller groove depth than the first region (18, 21),
in each of the inner shoulder axial grooves (13), the second region (19) is provided outward of the first region (18) in the tire axial direction, and
in each of the outer shoulder axial grooves (14), the second region (21) is provided inward of the first region (22) in the tire axial direction.

4. The pneumatic tire (1) according to claim 3, wherein the second region (22) of each outer shoulder axial groove (14) has a larger groove depth than the second region (19) of each inner shoulder axial groove (13).

5. The pneumatic tire according to any one of claims 1 to 4, wherein
the tread portion (2) has a crown main groove (4) that is located inward of the shoulder main groove (3) in the tire axial direction and continuously extends in the tire circumferential direction, and a first crown land portion (6A) and a second crown land portion (6B) that are adjacent to each other across the crown main groove (4),
in each of the first crown land portion (6A) and the second crown land portion (6B), a crown axial groove (30a, 30b) traversing the land portion (6A, 6B) and a crown lug groove (31a, 31b) that communicates at an end thereof with the crown main groove (4) and terminates at another end thereof in the land portion (6A, 6B) are provided, and
the crown lug groove (31a) provided in the first crown land portion (6A) is provided at a position that intersects a region obtained by imaginarily extending, along the tire axial direction, an inner end portion (39), at the crown main groove (4) side, of the crown axial groove (30b) provided in the second crown land portion (6B).

6. The pneumatic tire (1) according to claim 5, wherein the crown lug groove (31b) provided in the second crown land portion (6B) is provided at a position that intersects a region obtained by imaginarily extending, along the tire axial direction, an inner end portion (41), at the crown main groove (4) side, of the crown axial groove (30a) provided in the first crown land portion (6A).

7. The pneumatic tire (1) according to claim 5 or 6, wherein the crown lug groove (31a) provided in the first crown land portion (6A) and the crown axial groove (30b) provided in the second crown land portion (6B) are inclined in directions that are the same as each other.

## Patentansprüche

1. Luftreifen (1) mit einem Laufflächenabschnitt (2), wobei
eine Schulterhauptrille (3), die sich in einer Reifenumfangsrichtung auf jeder Seite der Laufflächenkante (Te) erstreckt, und ein zwischen der Laufflächenkante (Te) und der Schulterhauptrille (3) abgegrenzter Schulterlandabschnitt (5) in dem Laufflächenabschnitt (2) vorgesehen sind,
der Schulterlandabschnitt (5) in einen inneren Landabschnitt (10) auf der Seite der Schulterhauptrille (3) und einen äußeren Landabschnitt (11) auf der Seite der Laufflächenkante (Te) durch einen Umfangsfeinschnitt (8) unterteilt ist, der so vorgesehen ist, dass er sich kontinuierlich in der Reifenumfangsrichtung erstreckt und eine Breite von nicht mehr als 2 mm aufweist,
eine Vielzahl von inneren Schulteraxialrillen (13), die zwischen der Schulterhauptrille (3) und dem Umfangsfeinschnitt (8) kommunizieren, in dem inneren Landabschnitt (10) vorgesehen sind,
eine Vielzahl von äußeren Schulteraxialrillen (14), die zwischen der Laufflächenkante (Te) und dem Umfangsfeinschnitt (8) kommunizieren, in dem äußeren Landabschnitt (11) vorgesehen sind,
ein innerer Endabschnitt (16), in einer Reifenaxialrichtung, von jeder äußeren Schulteraxialrille (14) an einer Position vorgesehen ist, die einen Bereich nicht schneidet, der durch imaginäres Verlängern eines äußeren Endabschnitts (15), in der Reifenaxialrichtung, der inneren Schulteraxialrille (13) entlang der Reifenaxialrichtung erhalten wird,
ein erster Kronenlandabschnitt (6A) benachbart zu dem Schulterlandabschnitt (5) über die Schulterhauptrille (3) hinweg in dem Laufflächenabschnitt (2) vorgesehen ist, und
eine Kronenaxialrille (30), die den ersten Kronenlandabschnitt (6A) durchquert, in dem ersten Kronenlandabschnitt (6A) vorgesehen ist,
**dadurch gekennzeichnet, dass**
ein äußerer Endabschnitt (33), auf der Seite der Schulterhauptrille (3), der Kronenaxialrille (30) an einer Position vorgesehen ist, die einen Bereich schneidet, der durch imaginäres Verlängern eines inneren Endabschnitts (23), auf der Seite der Schulterhauptrille (3), der inneren Schulteraxialrille (13) entlang der Reifenaxialrichtung erhalten wird, und
die Kronenaxialrille (30) einen ersten Bereich (36) und zweite Bereiche (37) umfasst, die jeweils auf beiden Seiten, in der Reifenaxialrichtung, des ersten Bereichs (36) vorgesehen sind und jeweils eine geringere Rillentiefe als der erste Bereich (36) aufweisen.

2. Luftreifen (1) nach Anspruch 1, wobei ein Abstand (L2) in der Reifenaxialrichtung von einem Reifenäquator (C) zu dem Umfangsfeinschnitt (8) das 0,60- bis 0,75-fache eines Abstandes (L1) in der Reifenaxialrichtung von dem Reifenäquator (C) zu der Laufflächenkante (Te) beträgt.

3. Luftreifen (1) nach Anspruch 1 oder 2, wobei
eine jede von den inneren Schulteraxialrillen (13) und den äußeren Schulteraxialrillen (14) einen ersten Bereich (18, 21) und einen zweiten Bereich (19, 22) mit einer geringeren Rillentiefe als der erste Bereich (18, 21) aufweist,
in einer jeden von den inneren Schulteraxialrillen (13) der zweite Bereich (19) in der Reifenaxialrichtung außen von dem ersten Bereich (18) vorgesehen ist, und
in einer jeden der äußeren Schulteraxialrillen (14) der zweite Bereich (21) in der Reifenaxialrichtung innen von dem ersten Bereich (22) vorgesehen ist.

4. Luftreifen (1) nach Anspruch 3, wobei der zweite Bereich (22) jeder äußeren Schulteraxialrille (14) eine größere Rillentiefe aufweist als der zweite Bereich (19) jeder inneren Schulteraxialrille (13).

5. Luftreifen nach einem der Ansprüche 1 bis 4, wobei
der Laufflächenabschnitt (2) eine Kronenhauptrille (4), die in der Reifenaxialrichtung innen von der Schulterhauptrille (3) angeordnet ist und sich kontinuierlich in der Reifenumfangsrichtung erstreckt, und einen ersten Kronenlandabschnitt (6A) und einen zweiten Kronenlandabschnitt (6B) aufweist, die einander über die Kronenhauptrille (4) benachbart sind,
in einem jeden von dem ersten Kronenlandabschnitt (6A) und dem zweiten Kronenlandabschnitt (6B) eine Kronenaxialrille (30a, 30b), die den Landabschnitt (6A, 6B) durchquert, und eine Kronenstollenrille (31a, 31b) vorgesehen sind, die an ihrem einen Ende mit der Kronenhauptrille (4) in Verbindung steht und an ihrem anderen Ende in dem Landabschnitt (6A, 6B) endet, und
die Kronenstollenrille (31a), die in dem ersten Kronenlandabschnitt (6A) vorgesehen ist, an einer Position vorgesehen ist, die einen Bereich schneidet, der durch imaginäres Verlängern, entlang der Reifenaxialrichtung, eines inneren Endabschnitts (39), auf der Seite der Kronenhauptrille (4), der Kronenaxialrille (30b), die in dem zweiten Kronenlandabschnitt (6B) vorgesehen ist, erhalten wird.

6. Luftreifen (1) nach Anspruch 5, wobei die Kronenstollenrille (31b), die in dem zweiten Kronenlandabschnitt (6B) vorgesehen ist, an einer Position vorgesehen ist, die einen Bereich schneidet, der durch imaginäres Verlängern, entlang der Reifenaxialrichtung, eines inneren Endabschnitts (41) auf der Seite der Kronenhauptrille (4) der Kronenaxialrille (30a), die in dem ersten Kronenlandabschnitt (6A) vorgesehen ist, erhalten wird.

7. Luftreifen (1) nach Anspruch 5 oder 6, wobei die in dem ersten Kronenlandabschnitt (6A) vorgesehene Kronenstollenrille (31a) und die in dem zweiten Kronenlandabschnitt (6B) vorgesehene Kronenaxialrille (30b) in gleiche Richtungen geneigt sind.

## Revendications

1. Bandage pneumatique (1) ayant une portion formant bande de roulement (2), dans lequel
une rainure principale d'épaulement (3) s'étendant dans une direction circonférentielle du pneumatique au niveau de chaque côté de bordure de roulement (Te) et une portion en relief d'épaulement (5) démarquée entre le bord de roulement (Te) et la rainure principale d'épaulement (3) sont prévues dans la portion formant bande de roulement (2),
la portion en relief d'épaulement (5) est divisée en une portion en relief intérieure (10) au niveau du côté de la rainure principale d'épaulement (3) et en une portion en relief extérieure (11) au niveau du côté du bord de roulement (Te) par une fente circonférentielle (8) qui est prévue de manière à s'étendre en continu dans la direction circonférentielle du pneumatique et qui a une largeur qui n'est pas supérieure à 2 mm,
une pluralité de rainures axiales d'épaulement intérieur (13) qui communiquent entre la rainure principale d'épaulement (3) et la fente circonférentielle (8) sont prévues dans la portion en relief intérieure (10),
une pluralité de rainures axiales d'épaulement extérieur (14) qui communiquent entre le bord de roulement (Te) et la fente circonférentielle (8) sont prévues dans la portion en relief extérieure (11),
une portion terminale intérieure (16), dans une direction axiale du pneumatique, de chaque rainure axiale d'épaulement extérieur (14) est prévue à une position qui ne recoupe pas une région obtenue en prolongeant de façon imaginaire une portion terminale extérieure (15), dans la direction axiale du pneumatique, de la rainure axiale d'épaulement intérieur (13) le long de la direction axiale du pneumatique,
une première portion en relief de couronne (6A) adjacente à la portion en relief d'épaulement (5) à travers la rainure principale d'épaulement (3) est prévue dans la portion formant bande de roulement (2), et
une rainure axiale de couronne (30) qui traverse la première portion en relief de couronne (6A) est prévue dans la première portion en relief de couronne (6A),
**caractérisé en ce que**
une portion terminale extérieure (33), au niveau du côté de la rainure principale d'épaulement (3), de la rainure axiale de couronne (30) est prévue à une position qui recoupe une région obtenue en prolongeant de façon imaginaire une portion terminale intérieure (23), au niveau du côté de la rainure principale d'épaulement (3), de la rainure axiale d'épaulement intérieur (13) le long de la direction axiale du pneumatique, et
la rainure axiale de couronne (30) inclut une première région (36) et des secondes régions (37), qui sont prévues sur les deux côtés, dans la direction axiale du pneumatique, de la première région (36), respectivement et qui ont chacune une profondeur de rainure plus faible que la première région (36).

2. Bandage pneumatique (1) selon la revendication 1, dans lequel une distance (L2) dans la direction axiale du pneumatique depuis un équateur de pneumatique (C) jusqu'à la fente circonférentielle (8) est 0,60 à 0,75 fois une distance (L1) dans la direction axiale du pneumatique depuis l'équateur de pneumatique (C) jusqu'au bord de roulement (Te).

3. Bandage pneumatique (1) selon la revendication 1 ou 2, dans lequel
chacune des rainures axiales d'épaulement intérieur (13) et des rainures axiales d'épaulement extérieur (14) inclut une première région (18, 21) et une seconde région (19, 22) ayant une plus faible profondeur de rainure que la première région (18, 21),
dans chacune des rainures axiales d'épaulement intérieur (13), la seconde région (19) est prévue à l'extérieur de la première région (18) dans la direction axiale du pneumatique, et
dans chacune des rainures axiales d'épaulement extérieur (14), la seconde région (21) est prévue à l'intérieur de la première région (22) dans la direction axiale du pneumatique.

4. Bandage pneumatique (1) selon la revendication 3, dans lequel la seconde région (22) de chaque rainure axiale d'épaulement extérieur (14) a une profondeur de rainure plus grande que la seconde région (19) de chaque rainure axiale d'épaulement intérieur (13).

5. Bandage pneumatique selon l'une quelconque des revendications 1 à 4, dans lequel
la portion formant bande de roulement (2) a une rainure principale de couronne (4) qui est située à l'intérieur de la rainure principale d'épaulement (3) dans la direction axiale du pneumatique et qui s'étend en continu dans la direction circonférentielle du pneumatique, et une première portion en relief de couronne (6A) et une seconde portion en relief de couronne (6B) qui sont adjacentes l'une à l'autre à travers la rainure principale de couronne (4),
dans chacune de la première portion en relief de couronne (6A) et de la seconde portion en relief de couronne (6B), il est prévu une rainure axiale de couronne (30a, 30b) qui traverse la portion en relief (6A, 6B) et une rainure annexe de couronne (31a, 31b) qui communique à une de ses extrémités avec la rainure principale de couronne (4) et qui se termine à une autre de ses extrémités dans la portion en relief (6A, 6B), et
la rainure annexe de couronne (31a) prévue dans la première portion en relief de couronne (6A) est prévue à une position qui recoupe une région obtenue en prolongeant de façon imaginaire, le long de la direction axiale du pneumatique, une portion terminale intérieure (39), au niveau du côté de la rainure principale de couronne (4), de la rainure axiale de couronne (30b) prévue dans la seconde portion en relief de couronne (6B).

6. Bandage pneumatique (1) selon la revendication 5, dans lequel la rainure annexe de couronne (31b) prévue dans la seconde portion en relief de couronne (6B) est prévue à une position qui recoupe une région obtenue en prolongeant de façon imaginaire, le long de la direction axiale du pneumatique, une portion terminale intérieure (41), au niveau du côté de la rainure principale de couronne (4), de la rainure axiale de couronne (30a) prévue dans la première portion en relief de couronne (6A).

7. Bandage pneumatique (1) selon la revendication 5 ou 6, dans lequel la rainure annexe de couronne (31a) prévue dans la première portion en relief de couronne (6A) et la rainure axiale de couronne (30b) prévue dans la seconde portion en relief de couronne (6B) sont inclinées dans des directions qui sont les mêmes l'une et l'autre.
